# EUROPÄISCHE PATENTANMELDUNG

(11) **EP 0 813 043 A1**
(43) Veröffentlichungstag der Anmeldung: **17.12.1997**
(21) Anmeldenummer: 97109266.3
(22) Anmeldetag: 07.06.1997
(51) Int. Cl.: G01F 1/46

(54) **Differenzdruckdurchflussmesser**

(30) Priorität: 13.06.1996 DE 19623586
(71) Anmelder: ABB PATENT GmbH, 68309 Mannheim (DE)
(72) Erfinder: Ende, Horst, 67459 Böhl-Iggelheim (DE)
(74) Vertreter: Rupprecht, Klaus, Dipl.-Ing.

(57) **Zusammenfassung**

Die Erfindung betrifft eine querschnittsintegrierende Meßsonde für Durchflußmessungen nach dem Differenzdruckverfahren in einem ein strömendes Medium führenden Strömungsraum mit mindestens einem sich in das Rohr hinein erstreckenden Meßkörper, der einen Querschnitt ähnlich einem Vieleck aufweist und welcher Meßkörper entlang einer ersten Mantellinie wenigstens eine Meßbohrung zur Erfassung des Staudrucks und entlang einer hierzu im Winkel ≥ 50° versetzten zweiten Mantellinie mindestens eine Meßbohrung zur Erfassung des statischen Drucks aufweist, wobei jeder Meßkörper entlang einer Mantellinie wenigstens vier Meßbohrungen aufweist und in jede Meßbohrung jeweils ein Meßaufnehmer eingesetzt ist, welcher den auftreffenden Druck im Strömungsraum unmittelbar in der Meßebene des Meßkörpers erfaßt.

## Beschreibung

Die Erfindung betrifft eine Meßsonde für Durchflußmessungen nach dem Differenzdruckverfahren in einem ein strömendes Medium führenden allseitig berandeten Strömungsraum mit mindestens einem sich in das Rohr hinein erstreckenden Meßkörper, der einen Querschnitt ähnlich einem Vieleck aufweist und welcher Meßkörper entlang einer ersten Mantellinie wenigstens eine Meßbohrung zur Erfassung des Gesamtdrucks und entlang einer hierzu im Winkel ≥ 50° versetzten zweiten Mantellinie mindestens eine Meßbohrung zur Erfassung des statischen Drucks aufweist.

Die Durchflußmessung mit Staurohren, deren Meßkörper entlang seiner Mantellinie mehr als eine Meßbohrung besitzt, ist bereits seit langem bekannt. Während anfänglich Sonden mit einem kreiszylindrischen Grundkörper zur Anwendung gelangten und als Einrohrvariante bekannt wurden, bestehen heutige Meßsonden im wesentlichen aus einem äußeren Profilrohr, das eine auf die optimale Strömungsablösung ausgerichtete äußere abgerundete Kontur aufweist, zum Beispiel diamantförmig, das heißt mit einem hexagonalen Querschnitt.

Derartige Meßsonden besitzen üblicherweise Druckmeßbohrungen, die auf die Meßbedingungen ausgelegt und zur Erfassung des aus Strömungsdruck und statischem Druck zusammengesetzten Gesamtdrucks entgegen zur Strömungsrichtung des Mediumstroms ausgerichtet sind. Die gegen die Strömungsrichtung weisenden Druckmeßbohrungen erzeugen ein der Strömungsenergie proportionales analoges Meßsignal, das dem Gesamtdruck mit ausreichender Genauigkeit entspricht. Eine stromabwärts weisende Meßbohrung erfaßt das Meßsignal für den statischen Druck des strömenden Fluides.

Der Innenraum der gegen die Strömung ausgerichteten Meßsonde, in welchem zwei voneinander unabhängige, der äußeren Kontur angepaßte Meßkammern für den Gesamtdruck und für den statischen Druck integriert sind, ist über Druckmeßbohrungen mit dem Meßraum verbunden.

Bei einer weiteren Art von Sonden sind die Meßbohrungen zur Erfassung des statischen Drucks genauso angeordnet, wie die stromaufwärts ausgerichteten Meßbohrungen zur Erfassung des Gesamtdruckes. Hier wird der gemittelte statische Druck ebenfalls querschnittsintegrierend hinter der Stausonde erfaßt, der das zweite zur Differenzbildung notwendige gemittelte Drucksignal bildet.

Eine weitere Variante ist das sogenannte Meßkreuz, das aus der sogenannten Einrohrvariante kombiniert ist. Bei dieser Art von Meßanordnungen werden zwei oder - seltener - mehr als zwei Meßrohre im rechten Winkel zueinander in den Strömungsraum eingebaut. Eine solche Anordnung wird hauptsächlich zur Messung in großen kreisförmigen Querschnitten oder in rechteckigen Kanälen bei paralleler Anordnung der Sonden verwendet. Insgesamt entscheidet bei den Mehrrohrvarianten der noch vertretbare Druckverlust der Meßanordnung im Vergleich mit der Blendenmessung über die Anwendung solcher Varianten.

Eine Variante mit zwei über Kreuz angeordneten identischen Sondenkörpern mit einem sechseckigen Querschnitt ist aus der DE 30 38 180 A1 bekannt. Die jeweiligen Meßkammersignale werden über Impulsrohranschlüsse nach außen, außerhalb des Meßraumes geführt. Dort werden sie zur Meßsignalverarbeitung zusammengefaßt und mittels sehr empfindlicher Differenzdruckmeßumformer ausgewertet und der Informationsweiterverarbeitung zur Verfügung gestellt.

Allen bekannten Sensoren gemeinsam liegt das Prinzip der Erfassung des gemittelten Gesamtdruckes, das heißt aus der Geschwindigkeitsenergie und der statischen Druckenergie, entlang eines oder zweier Meßpfade, die stromaufwärts und - abwärts gerichtet sind, durch Strömungsaustausch zwischen dem Meßraum und dem Strömungsraum. Bei diesem Meßprinzip erfolgt die Umwandlung der Strömungsenergie des strömenden Mediums in einen gemittelten Gesamtdruck über Druckmeßbohrungen in einer Meßkammer.

Die einzelnen Druckmeßbohrungen liefern dazu jeweils ihren Anteil zu dem über den Querschnitt gemittelten Gesamtdruck einer Meßebene. Die Lage der Bohrungen verkörpern dabei den repräsentativen, mittleren Druck des ihnen zugeordneten Querschnittsbereiches. Die Aufsummierung der erfaßten Einzeldrücke erfolgt dann automatisch in der Meßkammer. Dies ist das bestimmende querschnittsintegrierende Prinzip des Meßsystems.

Eine Begleiterscheinung beim Einsatz von solchen Meßsonden sind verstopfte Bohrungen, welche somit keinen Beitrag zum Gesamtdruck in der Meßebene aus dem ihnen zugewiesenen Querschnittsbereich liefern können und das Ergebnis verfälschen. Ein solcher Querschnittsbereich kann zufällig der abgetastete Bereich mit der größten örtlichen Strömungsgeschwindigkeit sein. In diesem Fall geht also der Einfluß der Strömungsgeschwindigkeit mit dem größten Geschwindigkeitsvektor und damit mit dem größten Gewicht bei der Bildung des mittleren Gesamtdruckes verloren. Zwar wird in diesem Zusammenhang häufig ein Selbstreinigungseffekt durch ständiges Ein- und Ausströmen des Fluides herausgestellt, doch zeigt die Praxis diese Problematik. Ferner haben Untersuchungen ergeben, daß eine ungünstige Bohrlochgeometrie hierbei einen Fehlereinfluß von ca. 6% bis 15% auf den Einzelmeßwert hat, so daß auch der gemittelte Gesamtdruck entsprechend fehlerhaft ist.

Um derartigen Problemen vorzubeugen, wird vielfach die regelmäßige Reinigung der Meßkammer durch Freispülung vorgesehen. Der hierzu notwendige Aufwand ist nicht unbeträchtlich und hängt vom Meßort und von der Bauart der Meßsonde ab.

Ausgehend von diesem Stand der Technik ist es die Aufgabe der vorliegenden Erfindung, eine Staudrucksonde der eingangs genannten Art zu schaffen, welche unter Vermeidung der vorstehend erwähnten Nachteile einfach gestaltet ist und einen störungsfreien Betrieb für den vorgesehenen und möglichen Einsatzbereich gestattet.

Diese Aufgabe wird erfindungsgemäß durch die kennzeichnenden Merkmale des Anspruchs 1 gelöst. Weitere vorteilhafte Ausgestaltungen und Verbesserungen der Erfindung sind in den Unteransprüchen gekennzeichnet.

Dementsprechend ist erfindungsgemäß vorgesehen, daß jeder Meßkörper entlang einer Mantellinie wenigstens vier Meßbohrungen aufweist, daß in jede Meßbohrung jeweils ein Meßaufnehmer eingesetzt ist, welcher den auftreffenden Druck unmittelbar an der Oberfläche des Meßkörpers erfaßt, und daß jeder Meßaufnehmer über Signalkabel mit einer Auswerteeinrichtung verbunden ist.

Bei der Erfindung handelt es sich um eine querschnittsintegrierende Meßsonde mit Mikrominiatur-Druckaufnehmer und Temperaturkompensation für die Durchflußmessung von Gasen und Flüssigkeiten, welche anders als die bekannten Meßsonden unabhängig ist von der Größe oder Form der erforderlichen Meßbohrungen.

Vorteilhafterweise weist jeder Meßkörper einen hexagonalen Querschnitt mit zwei gegenüberliegend angeordneten Schmalseiten auf, wobei die Schmalseiten senkrecht zur Strömungsrichtung des Fluidstroms angeordnet sind.

Gemäß einer bevorzugten Ausführungsform der Erfindung sind die Meßbohrungen jeweils in wenigstens eine der beiden Schmalseiten des Meßkörpers eingeformt.

In weiterer Ausgestaltung der Erfindung sind die Meßaufnehmer in die Meßbohrungen abgedichtet eingepaßt, wobei vorzugsweise jeder Meßaufnehmer in die zugeordnete Meßbohrung eingeklebt ist. Vorteilhafterweise schließt der Meßaufnehmer mit der Außenoberfläche des Meßkörpers bündig ab. Der auftreffende Druck wird von einer Druckmembran aufgenommen, mit welcher jeder Meßaufnehmer versehen ist.

Gemäß einer alternativen Ausführungsform kann vorgesehen sein, daß die jeweilige Meßbohrung zur Außenoberfläche mit einer Deckmembran bündig abgedeckt ist, welche den darunter angeordneten Meßaufnehmer schützt. Hierbei ist zwischen der Deckmembran und der Druckmembran des Meßaufnehmers ein Medium vorgesehen, welches den auf die Deckmembran einwirkenden Druck auf den Meßaufnehmer überträgt.

Vorteilhafterweise ist in weiterer Ausgestaltung der Erfindung der Meßaufnehmer von innen in die zugeordnete Meßbohrung eingesetzt. Entweder wie vorgenannt eingeklebt oder eingespannt oder eingeklemmt.

Eine besonders vorteilhafte Ausführungsform ist dadurch gekennzeichnet, daß die Meßbohrungen für die Erfassung des Staudrucks und des statischen Drucks in demselben Meßkörper eingeformt sind. Hierbei sind die Meßbohrungen für die Erfassung des Staudrucks in die der Fluidströmung zugewandte Schmalseite des Meßkörpers eingeformt und die Meßbohrungen für die Erfassung des statischen Drucks in die der Fluidströmung abgewandte Schmalseite desselben Meßkörpers eingeformt.

Für die Herstellung des Meßkörpers und inbesondere dessen Oberflächenbeschaffenheit ist große Sorgfalt erforderlich, da deren Güte wesentlichen Einfluß auf strömungstechnische Parameter hat, da bereits eine geringfügige Änderung der hiervon abhängigen Strömungsparameter in den systematischen Fehler des Sensors einfließt.

Die wesentlichen Vorteile der erfindungsgemäßen Ausgestaltungen liegen in der hiermit erreichten Verschmutzungsunempfindlichkeit, da keine Ein- und Ausströmvorgänge stattfinden.

Ferner wird eine Verminderung der Meßgenauigkeit infolge der Bohrlochgeometrie und hierdurch verlustbehafteter Strömungsvorgänge ebenso vermieden wie die damit verbundene unvollständige Umsetzung des Meßsignals durch die maximale Umsetzung der Geschwindigkeitsenergie in ein Meßsignal.

Eine Beeinträchtigung des auswertbaren Meßsignals infolge verstärkten Einflusses des Signalrauschens der gesamten Meßkette, zum Beispiel bei kleiner Geschwindigkeitsenergie des strömenden Fluides im Bereich unter 0,35 m/s, wird durch die elektronische Auswertung minimiert.

Die bei Schleichströmungen vorhandene Unempfindlichkeit herkömmlicher Meßeinrichtungen führt zur Forderung nach einem hochempfindlichen und stark auflösenden Meßumformer in einem sehr kleinen Druckmeßbereich.

Ein weiterer Vorteil der erfindungsgemäßen Meßsonde liegt in der Verminderung des Fertigungs-, Montage- und Inbetriebnahmeaufwandes für die Meßeinrichtung aufgrund des Wegfalls der Impulsleitungen und Armaturen.

Gegebenenfalls notwendige und teure Baumaßnahmen wie Meßschachtvergrößerung, Lüftungsmaßnahmen, Bau- und Verkehrssicherungsmaßnahmen bei Meßschächten im öffentlichen Bereich etc. können auf den minimalen Aufwand zur Einbringung der Messung reduziert werden.

Die Einbaulage der erfindungsgemäßen Meßsonde ist unabhängig vom Meßmedium, da keine Impulsleitungen benötigt werden. Für den Einsatz bei zweiphasigen Strömungen bestehen Einschränkungen nur hinsichtlich des Temperaturbereiches für den vorgesehenen Einsatzort. Die Sensorsignale werden durch die mehrkanalige Auswerteelektronik entsprechend aufbereitet.

Der Meßkörper wird in den Meßraum (Rohr oder Kanal) eingebracht durch Schrauben, Schweißen oder Flanschen. Impulsleitungen und Meßventilkombinationen zum Füllen oder Entlüften und zum externen Meßumformeranschluß sind nicht notwendig.

Das den Meßkörper bildende Sondenrohr weist in seinem Inneren einen nach außen vollkommen dichten Kabelanschlußraum auf für die Signalableitung von den Mikrominiatur-Druckaufnehmer und die Temperaturkompensation. Von diesem Kabelanschlußraum aus werden die Sensoranschlüsse geschützt nach außen, außerhalb des Meßraumes, zum Meßverstärker/Meßumformer geführt, der in einem mit dem Störkörper verbundenen Anschlußgehäuse plaziert ist.

Die Sonde erhält üblicherweise dazu eine Einbauverlängerung, die gleichzeitig den aufgesetzten Meßkopf trägt. Diese Gestaltung greift auf herkömmliche Anwendungen zurück.

Die Meßlinie am Störkörper ist eine glatte, endliche Ebene mit strömungstechnisch günstigen Übergang zum Umströmungsprofil, in der die Mikrominiatur-Druckaufnehmern frontbündig entlang der Meßebene angeordnet sind. Die Mikrominiatur-Druckaufnehmer sollen auf diese Weise die örtlichen Geschwindigkeitsvektoren als druckerzeugende Signale erfassen und in das elektrisch analoge Meßsignal umsetzten. Mit ihnen erfolgt die Umsetzung der kinetischen Energie des strömenden Fluides direkt in das elektrisch analoge Meßsignal, den Gesamtdruck.

Die Kanten der Meßebene sind so ausgeführt, daß sie mit der Stromlinie entlang der Körperkontur zusammenfallen. Die Temperaturkompensation ist ebenfalls querschnittsintegrierend ausgeführt, sie kann aber auch für Punktmessung vorgesehen sein.

Die Anordnung der einzelnen Mikrominiatur-Druckaufnehmer, deren Anzahl wenigstens 4 und je nach Meßquerschnitt bis zu 16 Stück und mehr beträgt, ist abhängig vom Einsatzfall nach zwei logarithmischen Berechnungsverfahren bestimmt, die nachfolgend angegeben sind.

Das erste Verfahren ist die sogenannte Log-Tschebyschew-Methode (LTM), bei welcher die Erkenntnis zugrundeliegt, daß aufgrund des großen Gradienten des Geschwindigkeitsprofils im wandnahen Bereich zwischen diesem Verfahren und der Schwerelinienmethode kein wesentlicher Unterschied besteht. Die LTM hat den erheblichen Vorteil der zeitunabhängigen Geschwindigkeitsmittelung für den gesamten Funktionsverlauf. Alle Meßpunkte werden zum gleichen Zeitpunkt bewertet. Damit trägt jeder Meßwert der einzelnen Mikrominiatur-Druckaufnehmer zum globalen Gesamtergebnis des Querschnittsmittelwertes, das nur mit dem territorialen Gewicht der Drucksensorposition behaftet ist, bei. Der Innenkreis des Strömungsprofils wird demnach durch eine Gesamtkurve approximiert. Bei der Schwerelinienmethode, erfindungsgemäß ebenfalls zeitunabhängig, wird der Gesamtmittelwert im Innenkreis definitionsgemäß nur über einzelne Kurvenstücke zusammengesetzt. Er liegt, theoretischen Berechnungen und umfangreichen Messungen zufolge, unter den Werten der LTM und zeigt damit weniger Durchfluß an.

Das zweite Verfahren ist die Log-Linear-Methode (LLM), die sich nur hinsichtlich einiger Details von der LTM unterscheidet. Beide Verfahren zeigen bei stark gestörten Geschwindigkeitsfeldern sehr gute Ergebnisse.

Im übrigen können auch andere Verfahren für die Festlegung der Anordnung der Bohrungen zur Anwendung kommen, zum Beispiel die Trapez- und Tangentenregel. Diese setzen allerdings ein parabolisches Geschwindigkeitsprofil voraus und erweitern die Auswahlmöglichkeiten zur Festlegung der Meßpunkte für den jeweiligen Einsatzfall.

Die Bohrlochgeometrie muß nur noch den Anforderungen der Mikrominiatur-Druckaufnehmer genügen und wird nachfolgend anhand von Skizzen dargestellt und erläutert.

Die Meßkammer ist, wie vorstehend bereits erwähnt, über Druckmeßbohrungen mit dem Meßraum verbunden. Je nach Sensorart sind diese Bohrungen entlang der Mantellinie stromauf und bei gleichzeitiger statischer Druckmessung auch stromabwärts weisend angeordnet. Ihre Anzahl und ihre Verteilung auf der Mantellinie unterliegt gewissen physikalischen Gesetzmäßigkeiten, die aus meßtechnischer Sicht je nach Verfahren zur Bestimmung der Bohrungsanordnung mehr oder weniger zur optimalen Meßgenauigkeit beitragen. Für einige Sonden können die Bohrungen auch in gleichmäßiger, linearer Verteilung entlang der Mantellinie angeordnet sein.

Im allgemeinen werden sie nach der Schwerelinienmethode plaziert. Man spricht in diesen Fällen von flächengleicher Druckmessung. Diese Methode ist u.a. in der DIN 2640 näher beschrieben. Bei großen Nennweiten erfolgt die Sensorauslegung üblicherweise unter Berücksichtigung des Eigenschwingungsverhaltens.

Abhängig vom jeweiligen Meßsondentyp kann die Kalibrierung der aus der Meßsonde und der zugehörigen Signalverarbeitung gebildeten Meßanordnung bereits werksseitig oder nach dem Einbau erfolgen. Die hiermit erreichbaren Meßgenauigkeiten (kalibriert/unkalibriert) liegen im Bereich von ≤ 0,5% vom Meßwert (v.MW) oder über einen weiten Meßbereich (MB) bis 2,0% v.MB, mit der man eine für die Praxis ausreichende bis sehr gute Reproduzierbarkeit von ≤0,02% erreicht. Bevorzugt findet der Einsatz in Rohren und Kanälen ab DN25 und auch >DN4000 statt.

Je nach verwendetem Material können bei herkömmlichen Meßsonden Temperaturen bis 550 °C abgedeckt werden. Die Meßsonde gemäß der Erfindung ist derzeit für einen Temperaturbereich von max. 120°C vorgesehen und abhängig vom Typ des Miniatur-Drucksensors. Die Temperaturbereichserweiterung ist vorgesehen. Die Meßanordnungen berücksichtigen hierbei physikalische Einflüsse wie Kondensat- oder Gasblasenbildung oder den dem Meßverfahren immanenten Selbstreinigungseffekt z.B. bei einem mit Staub- oder Schmutzteilchen beladenem Fluid.

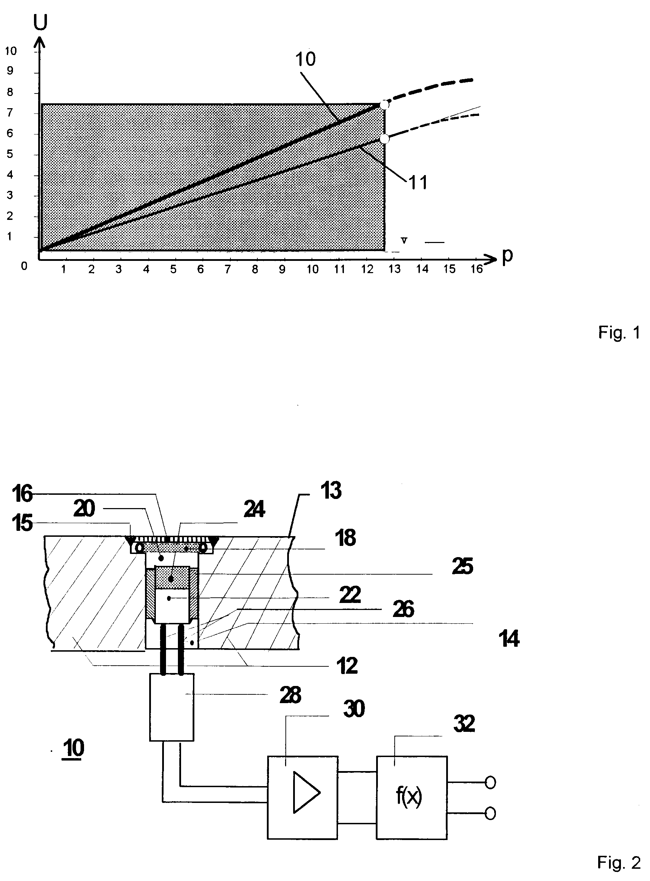

Die Meßsignalverarbeitung erfolgt weitgehend insitu über ein Kompensationsmodul mit einem mehrkanaligen Meßverstärker und die anschließende Umsetzung in ein elektronisch vorverarbeitetes, elektrisch analoges Einheitssignal (Fig. 2 bis 4).

Die Meßwertvorverarbeitung beinhaltet die Mittelung der erfaßten hochdynamischen nahezu punktförmigen Messungen bei Abtastfrequenzen im Bereich um 100 Hz. Das ermöglicht die Ausnutzung des niederfrequenten Amplitudenganges der Drucksensoren mit den Knickpunktfrequenzen des ungedämpften(1)/gedämpften(2) Ausgangssignals von ca. ωₖ₁ ∼ 7,14·10⁻⁶s bzw. ca. ωₖ₂ ∼ 3,57·10⁻⁵s. Die erreichbare Sensitivität ist in Fig. 1 abgeschätzt dargestellt.

Die wesentlichen Merkmale der Konstruktion gemäß der Erfindung bestehen in der Implementation von Mikrominiatur-Druckaufnehmern frontbündig mit der Meßebene des Meß- oder Störkörpers direkt in die Bohrlochgeometrie, so daß der Meßpfad mit den Drucksensoren in der Meßebene des Strömungsraumes mit der Mantellinie des Störkörpers, entlang der die Drucksensoren angeordnet sind, zusammenfällt. Eine solche Realisierung ist derzeit nicht bekannt und nicht praktiziert. Durch diese Konstruktion wird das Strömungsbild bei v=0 (Staupunkt) nicht durch Ein- und Auslaufströmungen gestört. Das Fluid überträgt durch Austauschvorgänge direkt die Gesamtenergie, gemäß der Theorie der Potentialströmungen, vollkommen auf die Mikrominiatur-Druckaufnehmer.

Fluidische verlustbehaftete Austauschvorgänge, wie vorstehend beim sogenannten herkömmlichen Typ beschrieben, finden nicht mehr statt. Es finden lediglich physikalisch bedingte Umströmungsvorgänge statt. Die Umströmung ist dafür so optimiert, daß eine festgelegte Ablösung der Strömung am Sondenkörper erfolgt und so der Strömungswiderstand des Störkörpers minimiert wird.

Auch ist es möglich, durch entsprechende Oberflächengestaltung in gewissen Grenzen eine reine Potentialströmung um den Störkörper einzustellen, so daß keine Strömungsablösung und damit keine verlustbehaftete Wirbelbildung am Strömungskörper stattfindet. Dies erfolgt durch Festlegung der Oberflächenrauhigkeit und die damit verbundene Vergrößerung der laminaren Grenzschichtdicke am Meß- beziehungsweise Störkörper.

Vorteilhafterweise wird die Ablösestelle am Meßkörper unter Berücksichtigung der konturbezogenen Umströmung und Ablösung an der Sonde so bestimmt, daß die Widerstandszahl des Störkörpers über einen weiten *Re*-Zahlenbereich konstant bleibt. Diese Optimierung erfolgt hierbei nicht allein theoretisch auf der Grundlage der Potentialströmungen, sondern wird zweckmäßigerweise begleitet durch Strömungsversuche in denen die Sondenkonstante ermittelt wird. Die Optimierung führt schließlich zu der Angabe von Korrekturfaktoren, die für die verschiedenen Nennweiten des Strömungsraumes sehr spezifische und voneinander verschiedene Werte aufweisen.

Die Übertragung der elektrischen Signale erfolgt über Signalkabel, die im Inneren des Meßkörpers geschützt geführt sind. Die Signalableitungskabel sind vorzugsweise verdrillt und gebündelt. Sie sind temperaturgeschützt nach außen in den aufgesetzten Anschlußkopf geführt.

Die Meßaufnehmer sind abgedichtet in die Bohrungen eingepaßt. Vorzugsweise vorgesehen ist eine einreihige Sensoranordnung entlang des Meßpfades, doch kann auch eine zweireihige für die gleichzeitige Ermittlung der mittleren Temperatur über den Meßquerschnitt vorgesehen sein.

Für eine weitere Meßsignalverbesserung bei eventuellem Verzicht auf minimalen Druckverlust kann eine doppelspaltige Sensoranordnung (als Tandemsensor) vorgesehen sein. Hierbei sind die Sensoren in die vorbereiteten Bohrungen wahlweise eingesetzt mit oder ohne Dichtring zur Abdichtung entsprechend der vorgesehenen Sensor-Temperaturbeständigkeit oder mittels der vorgenannt beschriebenen Techniken eingesetzt. Eine Variante hierzu sieht eine mittels Druckmittlermembran (Edelstahl oder Titan) geschützte Ausführung vor. Letztere Variante ist für Industrieanwendungen mit aggressivem Medium vorgesehen, wobei der Einsatz der anderen geschützten Sensoren in diesem Medium nicht ausgeschlossen ist. Die dünne Druckmittlermembran weist vorzugsweise eine Eigenresonanzfrequenz von ≥ 25,0 kHz auf. Für tiefere Frequenzen ist sie in Abhängigkeit vom dämpfenden Volumen des Druckmittlerraumes zu bestimmen. Der verbleibende Druckmittlerraum zwischen der Membran und der Sensoroberfläche ist exakt bestimmbar. Er ist bei notwendigem Schutz der Miniatur-Drucksensoren vor kontaminierenden und/oder aggressiven Medien mit einem geeigneten Druckmittlermedium zum Beispiel temperaturbeständige Hydraulikflüssigkeit, wie Silikonöl, gefüllt. Andererseits sind Drucksensoren mit direktem Kontakt zwischen der drucksensitiven Fläche und Edelstahlmembran einsetzbar. Der Einsatzfall bestimmt die Wahl der verschiedenen Ausführungen von Miniatur-Drucksensoren.

Die einzelnen elektrischen Druckaufnehmersignale werden elektronisch aufbereitet, gemittelt und als geschwindigkeitsproportionales Drucksignal zur Volumenstrombestimmung herangezogen.

Da das Meßprinzip mit Meßaufnehmern physikalisch bedingt ein Signalrauschen hervorruft, sind hinsichtlich der Meßsignalübertragung mit Druckmittlermembran und der Meßsignalverstärkung besondere Übertragungs- und Verarbeitungsmaßnahmen erforderlich, die aber bekannt sind. Hierzu wird auf industriell bereits praktizierte Technik zurückgegriffen.

Anhand von in der schematischen Zeichnung dargestellten Ausführungsbeispielen sollen die Erfindung, vorteilhafte Ausgestaltungen und Verbesserungen sowie besondere Vorteile der Erfindung näher erläutert und beschrieben werden.

Es zeigen
- Fig. 1: eine Kennlinie eines drucksensitiven Sensors;
- Fig. 2: einen ausschnittweisen Längsschnitt durch eine Meßsonde mit einem Sensor mit Druckmittler;
- Fig. 3: einen ausschnittweisen Längsschnitt durch eine Meßsonde mit einem eingeklebten Sensor;
- Fig. 4: einen ausschnittweisen Längsschnitt durch eine Meßsonde mit einem eingeklebten Sensor mit Stufenkörper
- Fig. 5: einen Längsschnitt durch eine Meßsonde mit mehreren Sensoren;
- Fig. 6: die Meßsonde gemäß Fig. 5 in Frontansicht
- Fig. 7: eine Stirnansicht auf die Meßsonde gemäß Fig. 5 mit einseitiger Bohrung;
- Fig. 8: eine Stirnansicht auf eine Meßsonde mit zweiseitiger Bohrung.
- Fig. 9: eine Meßsonde im Längsschnitt
und
- Fig. 10: die Meßsonde gemäß Fig. 9 in Frontansicht (z. B. als sogenannte Tandem-Meßsonde)

In Fig. 1 ist eine Kennlinie eines drucksensitiven Sensors in Abhängigkeit von einer resultierenden Spannung U dargestellt, wobei die in Fig. 1 obere Kurve diese Abhängigkeit für einen Einzelsensor wiedergibt, während die flachere Kurve darunter den abgeschätzten Verlauf für die gemittelten Werte für eine Meßebene bei vollsymmetrischem Strömungsprofil zeigt.

Fig. 2 zeigt einen ausschnittweisen Längsschnitt durch einen erfindungsgemäßen Meßkörper 10 mit einem Sensor 22, der in der Meßebene 13 in eine in die Wandung 12 des Meßkörpers 10 eingeformte Meßbohrung 14 eingesetzt ist und mit einer Deckmembran 16, die vorzugsweise materialeinheitlich mit dem Meßkörper 10 ist, zum Beispiel aus Edelstahl, gegen das Strömungsmedium geschützt ist. Die dem Druckmittlerfluid zugewandte Sensorfläche ist mit einer weiteren Membran, der Druckmembran 24, versehen, die vorteilhafterweise aus Silizium besteht und mit dem Sensor eine Baueinheit bildet.

Die Deckmembran 16 ist mittels eines Dichtelements 18, zum Beispiel Vitondichtring, fluiddicht in die Ausnehmung 14 eingesetzt und mittels einer bündig bearbeiteten Verbindungsklebung 15 beziehungsweise Schweiß- oder Lötnaht mit der Wand 12 des Meßkörpers 10 verbunden. Der Meßkörper 10 wird wegen seiner störenden Auswirkungen auf die Strömung des Strömungsfluids auch als Störkörper bezeichnet.

Zwischen der Deckmembran 16 und dem Sensor ist ein quasi inkompressibles Medium 20, zum Beispiel temperaturbeständiges Hydraulikfluid, als Druckmittler vorgesehen. Der Sensor 22 selbst ist vorzugsweise ein drucksensitiver Meßaufnehmer, der in die Meßbohrung 14 mittels Klebemittel 25, zum Beispiel Epoxidharz, eingeklebt ist. An der der Druckmembran 24 entgegengesetzten Stirnseite des Sensors 22 sind als Litze ausgebildete Signalkabel 26 angeordnet, über welche die erfaßten Drucksignale einer aus einem Kompensationsmodul 28, einem Verstärkermodul 30 und einem Kalkulationsmodul 32 zusammengesetzten Auswerteeinheit zugeführt werden.

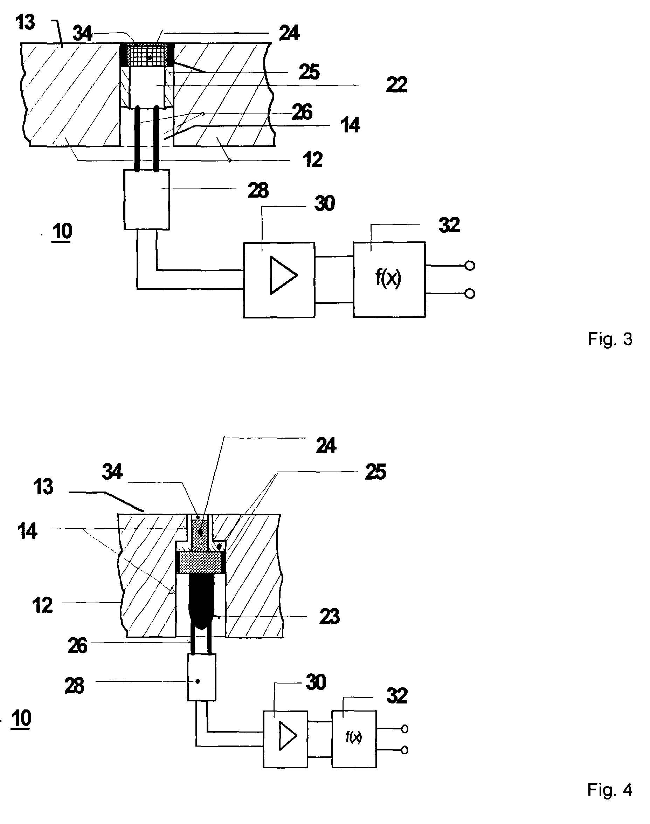

In Fig. 3 ist ein ausschnittweiser Längsschnitt durch einen Meßkörper 10 mit einem eingeklebten Sensor 22 gezeigt, der im Unterschied zu der Anordnung gemäß Fig. 2 unmittelbar in der Meßebene angeordnet ist, das heißt, ohne Druckmittler vorgesehen ist. Hierbei ist die Druckmembran 24 des Sensors 22 mit einer Beschichtung, zum Beispiel aus Parylen, als Membranschutz versehen. Die weiteren Einzelheiten entsprechen im übrigen dem in Fig. 2 gezeigten Aufbau und sind daher mit den jeweils entsprechenden Bezugsziffern versehen.

In Fig. 4 ist eine Abwandlung der in Fig. 3 gezeigten Anordnung dargestellt, bei welcher der Sensor 23 sich stufenförmig zur Meßebene hin verjüngt. Entsprechend ist auch die Meßbohrung ausgebildet. Im übrigen aber entspricht auch hierbei die weitere Gestaltung der in der Fig. 3 gezeigten Anordnung und entsprechender Edelstahlmembran 34. Daher sind auch hier gleiche Merkmale mit den jeweils entsprechenden Bezugsziffern versehen.

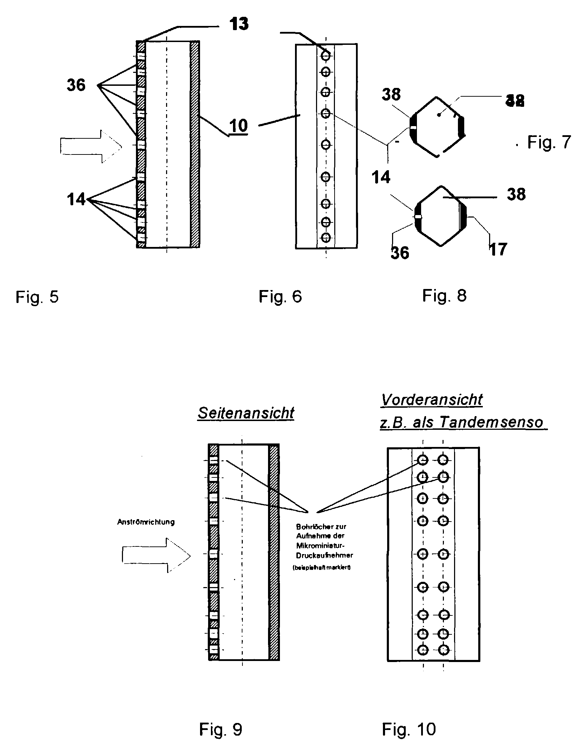

In Fig. 5 ist ein Längsschnitt durch einen erfindungsgemäßen Meßkörper 10 mit in der Meßebene 13 eingeformten Meßbohrungen 14, welche durch Bohrlochstege 36 voneinander getrennt sind.

In Fig. 6 ist der Meßkörper 10 gemäß Fig. 5 in Frontansicht dargestellt, so daß die einzelnen Meßbohrungen 14 in der Meßebene 13 erkennbar sind.

In Fig. 7 und 8 ist jeweils eine Stirnansicht des einen hexagonalen Querschnitt aufweisenden Meßkörpers 10 gezeigt, wobei der wesentliche Unterschied zwischen beiden Varianten darin besteht, daß der in Fig. 7 gezeigte Meßkörper nur Meßbohrungen in der der Strömung entgegen gerichteten Meßebene 13 aufweist, während der in Fig. 8 gezeigte Meßkörper auch auf der gegenüberliegenden, stromab gelegenen Seite eine zweite Meßebene 17 mit Meßbohrungen 14 aufweist.

In Fig. 9 und 10 ist eine der in den Fig. 5 und 6 weitgehend entsprechende Darstellung eines Meßkörpers 11 gezeigt, der im Unterschied zu der aus Fig. 5 und 6 bekannten Ausführung eine Gestaltung mit zwei Reihen von Meßbohrungen 14 in einer Meßebene 13 aufweist, die als sogenannter Tandemsensor bezeichnet wird. ausgebildet

## Patentansprüche

1. Querschnittsintegrierende Meßsonde für Durchflußmessungen nach dem Differenzdruckverfahren in einem ein strömendes Medium führenden Strömungsraum mit mindestens einem sich in diesen hinein erstreckenden Meßkörper, der einen Querschnitt in Form ähnlich einem Vieleck aufweist und welcher entlang einer ersten Mantellinie wenigstens eine Meßbohrung zur Erfassung des Staudrucks und entlang einer hierzu im Winkel ≥ 50° versetzten zweiten Mantellinie wenigstens eine Meßbohrung zur Erfassung des statischen Drucks aufweist, dadurch gekennzeichnet, daß die Meßsonde entlang einer Mantellinie wenigstens vier Meßbohrungen aufweist, daß in jede Meßbohrung jeweils ein Meßaufnehmer eingesetzt ist, welcher den auftreffenden Druck unmittelbar in der Meßebene des Meßkörpers erfaßt.

2. Meßsonde nach Anspruch 1, dadurch gekennzeichnet, daß der Meßkörper einen hexagonal ähnlichen Querschnitt mit zwei gegenüberliegend angeordneten Schmalseiten, als Meßebenen, aufweist.

3. Meßsonde nach Anspruch 2, dadurch gekennzeichnet, daß die Meßbohrungen jeweils in wenigstens eine Schmalseite des Meßkörpers eingeformt sind.

4. Meßsonde nach einem der Ansprüche 2 oder 3, dadurch gekennzeichnet, daß die Schmalseiten senkrecht zur Strömungsrichtung des Fluidstroms angeordnet sind.

5. Meßsonde nach einem der vorherigen Ansprüche, dadurch gekennzeichnet, daß die Meßaufnehmer in die Meßbohrungen abgedichtet eingepaßt sind.

6. Meßsonde nach Anspruch 5, dadurch gekennzeichnet, daß der Meßaufnehmer in die zugeordnete Meßbohrung eingeklebt, eingespannt oder eingeklemmt ist.

7. Meßsonde nach einem der vorherigen Ansprüche, dadurch gekennzeichnet, daß der Meßaufnehmer eine Druckmembran aufweist.

8. Meßsonde nach einem der vorherigen Ansprüche, dadurch gekennzeichnet, daß die jeweilige Meßbohrung zur Außenoberfläche mit einer Deckmembran bündig abgedeckt ist, welche den Meßaufnehmer schützt.

9. Meßsonde nach einem der vorherigen Ansprüche, dadurch gekennzeichnet, daß zwischen der Deckmembran und dem Meßaufnehmer ein Medium vorgesehen ist, welches den auf die Deckmembran einwirkenden Druck auf den Meßaufnehmer überträgt.

10. Meßsonde nach einem der Ansprüche 1 bis 7, dadurch gekennzeichnet, daß der Meßaufnehmer mit der Außenoberfläche des Meßkörpers bündig abschließend in die Meßbohrung eingesetzt ist.

11. Meßsonde nach einem der vorherigen Ansprüche, dadurch gekennzeichnet, daß der Meßaufnehmer von innen oder außen in die zugeordnete Meßbohrung eingesetzt ist.

12. Meßsonde nach einem der vorherigen Ansprüche, dadurch gekennzeichnet, daß die Meßbohrungen für die Erfassung des Staudrucks und des statischen Drucks in demselben Meßkörper eingeformt sind.

13. Meßsonde nach Anspruch 12, dadurch gekennzeichnet, daß die Meßbohrungen für die Erfassung des Staudrucks in die der Fluidströmung zugewandte Schmalseite des Meßkörpers eingeformt sind und daß die Meßbohrungen für die Erfassung des statischen Drucks in die der Fluidströmung abgewandte Schmalseite desselben Meßkörpers eingeformt sind.

14. Meßsonde nach einem der vorherigen Ansprüche, dadurch gekennzeichnet, daß jeder Meßaufnehmer über Signalkabel mit einer ein- oder mehrkanaligen Auswerteeinrichtung verbunden ist.

15. Meßsonde nach Anspruch 14, dadurch gekennzeichnet, daß in die Signalkabel ein Kompensationsglied zwischengeschaltet ist.

16. Meßsonde nach einem der vorherigen Ansprüche, dadurch gekennzeichnet, daß in der Meßebene gleichzeitig Druck und Temperatur querschnittsintegrierend erfaßt werden, unabhängig von der Anordnung der Druck- und Temperatursensoren in der Meßebene.

17. Meßsonde nach einem der vorherigen Ansprüche, dadurch gekennzeichnet, daß die Meßsonde an ihrem außerhalb des Strömungsraumes befindlichen Ende einen Anschlußkopf für einen Meßwertumformer trägt.

18. Meßsonde nach einem der vorherigen Ansprüche, dadurch gekennzeichnet, daß die Meßsonde ohne Ventilkombination am Anschlußkopf auskommt.

19. Meßsonde nach einem der vorherigen Ansprüche, dadurch gekennzeichnet, daß der Sondenschaft mittels Flansch am Meßkörper befestigt ist.

20. Meßsonde nach einem der Ansprüche 1 bis 18, dadurch gekennzeichnet, daß der Sondenschaft mittels Schweißverbindung am Meßkörper anschließt.
